(19) Europäisches Patentamt
European Patent Office
Office européen des brevets

(11) **EP 3 098 426 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **16171829.1**

(22) Anmeldetag: **27.05.2016**

(51) Int Cl.:
*B64D 27/16* (2006.01)       *B64C 30/00* (2006.01)
*F01D 15/12* (2006.01)       *F01D 17/16* (2006.01)
*F02C 9/18* (2006.01)        *F02C 9/22* (2006.01)
*F02K 1/09* (2006.01)        *F02K 1/15* (2006.01)
*F02K 3/02* (2006.01)        *F02K 3/06* (2006.01)
*F02K 3/075* (2006.01)       *F02K 3/077* (2006.01)

(54) **ADAPTIVES FLUGZEUGTRIEBWERK**

ADAPTIVE AIRCRAFT ENGINE

TURBINE ADAPTATIVE D'AVION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2015 DE 102015209892**

(43) Veröffentlichungstag der Anmeldung:
**30.11.2016 Patentblatt 2016/48**

(73) Patentinhaber: **Rolls-Royce Deutschland Ltd & Co KG**
**15827 Blankenfelde-Mahlow (DE)**

(72) Erfinder: **DR. NEGULESCU, Dimitrie**
**15827 Blankenfelde-Mahlow (DE)**

(74) Vertreter: **Maikowski & Ninnemann Patentanwälte Partnerschaft mbB**
**Postfach 15 09 20**
**10671 Berlin (DE)**

(56) Entgegenhaltungen:
DE-A1- 2 624 164       DE-A1- 2 638 882
US-A- 4 085 583        US-A- 5 404 713
US-A1- 2003 132 342    US-A1- 2006 236 675
US-A1- 2007 000 232    US-A1- 2015 113 941

**Beschreibung**

Die Erfindung betrifft ein adaptives Flugzeugtriebwerk mit den Merkmalen des Anspruchs 1 und ein Flugzeug mit den Merkmalen des Anspruchs 15.

Es ist bekannt, dass Flugzeugtriebwerke bei Unterschall- und Überschallbetrieb unterschiedliche Charakteristiken aufweisen müssen, um effizient zu funktionieren. Für den Flugbetrieb ist es sinnvoll, einen möglichst hohen Schub relativ zur einströmenden Luft zu haben. Dies bedingt aber, dass beim Start sehr hohe Strahlgeschwindigkeiten vorliegen müssen, was mit einer hohen Geräuschentwicklung einhergeht. Ziel ist es dabei, dass die Prozessführung so angepasst wird, dass im Gesamtbereich vom Start bis zum Überschallflug eine entsprechend angepasste Charakteristik vorliegt. So sind sogenannte Variable Cycle Engines (VCE) bekannt, bei denen insbesondere das Bypassverhältnis des Flugzeugtriebwerks adaptierbar ist. Dabei geht der Stand der Technik (z.B. Müller, Luftstrahltriebwerke, 1997, Seiten 312-313) davon aus, dass das Bypassverhältnis bei geringen Ma-Zahlen groß und bei hohen Ma-Zahlen klein ist.

Ein adaptives Flugzeugtriebwerk ist aus der US 2007/000232 A1 bekannt. Das Triebwerk weist einen inneren Nebenstromkanal und einen äußeren Nebenstromkanal auf, wobei ein erster Strom durch den äußeren Nebenstromkanal in Richtung einer Düsenvorrichtung geht, ein zweiter Strom durch den inneren Nebenstromkanal zu einem "variable area bypass injector VABI" geht und ein dritter Strom durch das Kerntriebwerk geht. Der zweite Strom durch den inneren Nebenstromkanal wird mit den Verbrennungsgasen der Niederdruckturbine unter Verwendung des VABI gemischt. Der Strom durch den äußeren Nebenstromkanal wird durch die Einstellung der Düsenvorrichtung gesteuert.

Weitere Flugzeugtriebwerke sind in den Dokumenten US 5 404 713 A, US 2006/236675 A1, US 4 085 583 A und DE 26 24 164 A1 beschrieben.

Es besteht die Aufgabe, neue und effizientere Flugzeugtriebwerke zu schaffen. Diese Aufgabe wird durch ein Flugzeugtriebwerk mit den Merkmalen des Anspruchs 1 gelöst.

Dabei weist das Flugzeugtriebwerk einen ersten, inneren Nebenstromkanal in einem Kerntriebwerk auf. Ein zweiter, äußerer Nebenstromkanal umgibt den ersten Nebenstromkanal wenigstens teilweise. Adaptionsmittel, insbesondere adaptive Düsen (d.h. Düsen mit einem adaptiv anpassbaren Querschnitt) dienen dabei der Änderung eines durchströmten Querschnitts des Kerntriebwerks mit dem ersten Nebenstromkanal und der Änderung des durchströmten Querschnitts des zweiten Nebenstromkanals in Abhängigkeit von der Fluggeschwindigkeit. Das adaptive Flugzeugtriebwerk weist ein Zweistrom, Drei-Wellentriebwerk mit zwei Nebenstromkanälen auf, mit einer Mischvorrichtung für eine Strömung aus der Brennkammer und einer Strömung aus dem inneren Nebenstromkanal, wobei die Mischvorrichtung in Strömungsrichtung vor der Niederdruckturbine angeordnet ist. Durch die Verwendung von zwei Nebenstromkanälen in Verbindung mit den Adaptionsmitteln, insbesondere adaptive Düsen für die Querschnitte kann das Flugzeugtriebwerk besonders effizient bei Unter- als auch bei Überschall betrieben werden, da der Strömungswiderstand adaptiv an die jeweilige Fluggeschwindigkeit eingestellt werden kann.

In einer Ausführungsform dient eine innere, primäre Düse zur Änderung des Querschnitts des Kerntriebwerks mit dem ersten Nebenstromkanal und eine zweite, sekundäre Düse zur Änderung des Querschnitts des zweiten Nebenstromkanals, wobei für den Nettoschub des gesamten Flugzeugtriebwerks

$$F_{netto} = F_{primär,\ netto} + F_{sekundär,\ netto},$$

und für den effektiven Schub des gesamten Flugzeugtriebwerks

$$F_{effektiv} = F_{netto} - \text{Widerstandskraft des installierten Flugzeugtriebwerkes}$$

gilt. Dabei ist in der Ausführungsform der Anteil des Nettoschubs $F_{primär,\ netto}$ der primären Düse und / oder der Anteil des Nettoschubs $F_{sekundär,netto}$ in Abhängigkeit von der Fluggeschwindigkeit einstellbar, insbesondere auf Werte für $F_{primär,\ netto}$ von 50% des Nettoschubs ($F_{netto}$) im Fall des Starts (maximum Take-off) bis zu 91% des Nettoschubs ($F_{netto}$) im Fall der Reisefluggeschwindigkeit (supersonic cruise speed) und Wert für $F_{sekundär,\ netto}$ von 50% des Nettoschubs ($F_{netto}$) im Fall des Starts (maximum Take-off) bis zu 9% des Nettoschubs ($F_{netto}$) für den Fall der Reisefluggeschwindigkeit (supersonic cruise speed). Damit steigt der Anteil des Schubs durch die primäre Düse (d.h. die innere Düse) mit der Fluggeschwindigkeit an. Dementsprechend sinkt der Anteil des Schubs durch die sekundäre Düse (d.h. die äußere Düse) bei steigender Fluggeschwindigkeit.

In einer Ausführungsform ist mit der äußeren, sekundären Düse ein durchströmter Querschnitt des zweiten, äußeren Nebenstromkanals bei Überschallströmung, insbesondere bei Ma > 1,4, vergrößerbar, insbesondere maximierbar. Durch die Vergrößerung des mindestens einen Querschnitts kann der Strömungswiderstand der äußeren Teile des Flugzeugtriebwerks bei hohen Geschwindigkeiten minimiert werden. Entsprechend ist bei einer alternativen oder zusätzlichen Ausführungsform mit der äußeren, sekundären Düse ein durchströmter Querschnitt des zweiten Nebenstromkanals bei Unterschallströmung, insbesondere bei Ma < 0,8 verkleinerbar, insbesondere minimierbar.

In einer weiteren Ausführungsform ist mit der sekundären Düse der durchströmte Querschnitt des zweiten Nebenstromkanal so vergrößerbar, dass bei Überschallströmung die Differenz zwischen dem Nettoschub der sekundären Düse ($F_{sekundär, effektiv'}$) und dem Installationswiderstand des sekundären Kreises ($ID_{sekundär}$) - d.h. der effektive Schub ($F^{-}_{sekundär, effektiv}$) der sekundären Düse - klein wird, insbesondere minimal wird.

Wenn in einer Ausführungsform des adaptiven Flugzeugtriebwerks im Einlaufbereich des Flugzeugtriebwerks ein Zusatzeinlauf vorgesehen ist, kann dieser bei Unterschallbedingungen geöffnet und bei Überschallbedingungen geschlossen werden.

Für die Einstellung der jeweiligen Betriebsbedingungen ist in einer Ausführungsform ein Fanrotor, mindestens ein steuer- oder regelbares Fannachleitrad, mindestens ein steuer- oder regelbares Vorleitrad einer Niederdruckturbine und / oder mindestens ein steuer- oder regelbares Nachleitrad einer Niederdruckturbine vorgesehen. Zusammen mit den insbesondere durch Düsen einstellbaren Querschnitten kann hier die jeweils eine Anpassung an die notwendigen Betriebsbedingungen vorgenommen werden.

Zusätzlich oder alternativ kann eine Ausführungsform einen Fanrotor aufweisen, der mit einem Hochleistungsgetriebe gekoppelt ist und über eine Turbinenstufe antreibbar ist. Dabei kann der Fanrotor insbesondere verstellbare Schaufeln aufweisen. Durch den Einsatz des Hochleistungsgetriebes können der Fanrotor und die antreibende Turbinenstufe mit jeweils optimierten Drehzahlen betrieben werden.

In einer weiteren Ausführungsform ist das Flugzeugtriebwerk so ausgebildet, dass es nachbrennerfrei ist. Der Betrieb eines Nachbrenners ist sehr laut, so dass insbesondere ein nachbrennerfreies Zivilflugzeug unter weniger Auflagen betreibbar ist. Auch wird durch diese Maßnahme der Ausstoß von NOX-Gasen reduziert.

In einer Ausführungsform ist für den äußeren Nebenstromkanal im Unterschallbereich ein Bypassverhältnis

$$\frac{\text{Durchfluss durch ersten und zweiten Nebenstromkanal}}{\text{Durchfluss durch Durchströmung Fanrotor} - (\text{Durchfluss durch ersten und zweiten Nebenstromkanal})}$$

von kleiner 4, insbesondere 3,8 einstellbar ist. In einer alternativen oder zusätzlichen Ausführungsform ist für den inneren Nebenstromkanal im Über- und Unterschallbereich ein zweites Bypassverhältnis (Strömung durch inneren Nebenstromkanal / Strömung durch den inneren Teil des Kerntriebwerks) zwischen 1,2 und 0,8, insbesondere 1 einstellbar.

Bei einer Ausführungsform ist eine Regelungs- oder Steuerungsvorrichtung vorgesehen, mit der die Einstellung der Adaptionsmittel, insbesondere der primären und / oder sekundären Düsen, des mindestens einen Fannachleitrades, des mindestens einen Vorleitrades der Niederdruckturbine und / oder des mindestens einen Nachleitrades der Niederdruckturbine in Abhängigkeit von der Geschwindigkeit des Flugzeugtriebwerk betrieben werden kann. So kann durch eine gemeinsame Einstellung (z.B. durch eine zentrale Steuerung, wie der EEC) der primären und sekundären Düsen, des Fannachleitrades, des Vorleitrades der Niederdruckturbine und des Nachleitrades der Niederdruckturbine eine optimale Wirkung erzielt werden.

In einer weiteren Ausführungsform ist die Niederdruckturbine mindestens teilweise von einer Strömung aus einer Brennkammer und einer Strömung aus dem inneren Nebenstromkanal antreibbar.

Bei einer weiteren Ausführungsform ist eine äußere Gondel und / oder das Kerntriebwerk achsensymmetrisch ausgebildet.

Die Aufgabe wird auch durch ein Flugzeug mit den Merkmalen des Anspruchs 15 gelöst. In einer Ausführungsform ist das mindestens eine Flugzeugtriebwerk am Heck, insbesondere oberhalb einer Tragfläche des Flugzeugs angeordnet ist.

In Zusammenhang mit den in den Figuren dargestellten Ausführungsbeispielen wird die Erfindung erläutert. Dabei zeigt

Fig. 1    den Aufbau eines Flugzeugs mit einer Ausführungsform eines Flugzeugtriebwerks für den Unter- und Überschallbetrieb;

Fig. 2    einen Querschnitt durch eine Ausführungsform des Flugzeugtriebwerks in der Arbeitsposition für niedrige Machzahlen;

Fig. 3    einen Querschnitt durch eine Ausführungsform des Flugzeugtriebwerks in der Arbeitsposition für hohen Unterschallflug;

Fig. 4    einen Querschnitt durch eine Ausführungsform des Flugzeugtriebwerks in der Arbeitsposition für Überschallbetrieb;

Fig. 5    einen Querschnitt einer Ausführungsform mit einem Hochleistungsgetriebe;

Fig. 6    eine schematische Darstellung der Wellenanbindung gemäß der Ausführungsform in Fig. 5.

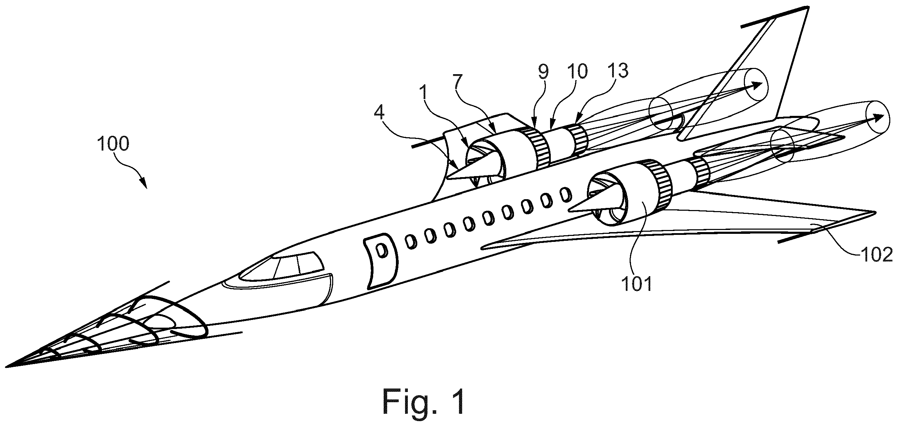

In Fig. 1 ist beispielhaft ein Flugzeug 100 dargestellt, das für eine Reisegeschwindigkeit von Ma = 1,75 ausgelegt ist. Im Folgenden sind insbesondere alle Zahlenwerte im lediglich beispielhaft zu verstehen. Ausführungsformen der Flugzeugtriebwerke 101 sind z.B. auch in Flugzeugen 100 mit anderen Dimensionen einsetzbar.

Das Flugzeug 100 gemäß der dargestellten Ausführungsform ist ein Supersonic Businessjet SSBJ. Dieser verfügt dabei über adaptive Flugzeugtriebwerke 101, die einen Flugbetrieb zulassen, bei dem der Lufteinlass der jeweiligen Fluggeschwindigkeit (z.B. Ma = 0 bis 1,75) angepasst ist, wie dies in der Folge noch beschrieben wird.

Die adaptiven Flugzeugtriebwerke 101 sind als Zweikreis-Dreiwellen-Flugzeugtriebwerke ausgebildet und oberhalb der Tragflächen 102 angeordnet. Die Flugzeugtriebwerke 101 weisen eine Länge von ca. 7 m auf. Der Durchmesser einer Nacelle 7 (äußere Gondel) der Flugzeugtriebwerke 101 beträgt ca. 1,9 m. Der Durchmesser einer Kerntriebwerksverkleidung 10 beträgt 1,4 m.

Das Flugzeug 100 weist eine Rumpflänge von 36 m und eine Flügelspannweite von 21 m auf. Die gesamte Flügelfläche beträgt 120 $m^2$. Als maximales Startgewicht werden 100.000 lb (45,4 t) angenommen.

Das dargestellte Flugzeug 100 weist eine für den Überschallflug besonders ausgebildete, lanzenartige, im Querschnitt flachgeformte Flugzeugnase auf. Andere Ausführungsformen des Flugzeugs 100 können auch andere Abmessungen und / oder Formen haben.

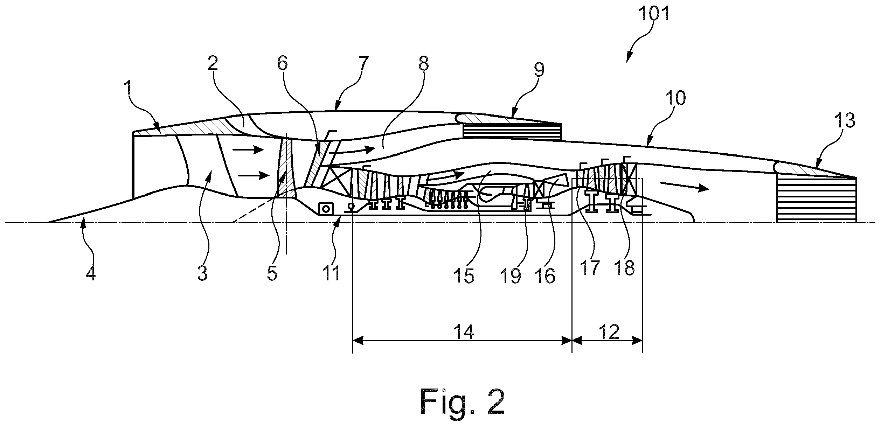

Am Einlauf der adaptiven Flugzeugtriebwerke 101 sind jeweils konische Einlaufzentralkörper 4 vorgesehen, die radial von einer Einlauflippe 1 umgeben werden (siehe auch Fig. 2). Der Einlauf kann in anderen Ausführungsformen auch anders gestaltet sein, wie dies z.B. bei der Concorde der Fall war.

Am hinteren Ende der adaptiven Flugzeugtriebwerke 101 sind jeweils zwei Düsen 9, 13 angeordnet, deren Querschnitte konvergent-divergent adaptiv eingestellt werden können, was im Zusammenhang mit den Fig. 2 bis 4 noch näher dargestellt wird.

Diese beiden Flugzeugtriebwerke 101 weisen jeweils einen maximalen Startschub von 20.000 lbf (88.964,4 N) auf. Der Schub bei der nominellen Reisefluggeschwindigkeit von Ma = 1,75 beträgt jeweils 6.000 lbf (26.689,3 N). Hier beträgt der Schub der Reisefluggeschwindigkeit 30% des Schubs beim Start. Wie oben bereits angemerkt, können andere Flugzeuge mit anderen Ausführungsformen der Flugzeugtriebwerke 101 andere Werte für den Schub und die Geschwindigkeiten aufweisen.

Das hier beschriebene Flugzeug 100 und seine Aggregate sind lediglich beispielhaft zu verstehen, so dass die adaptiven Flugzeugtriebwerke 101 auch an anders konstruierten oder dimensionierten Zivil- oder Militärflugzeugen angeordnet werden können. Insbesondere können auch die Größen- und / oder Leistungsangaben der Flugzeugtriebwerke 101 bei anderen Ausführungsformen anders ausgebildet sein. Auch ist es möglich, dass mehr als zwei der adaptiven Flugzeugtriebwerke 101 an einem Flugzeug 100 verwendet werden.

Durch die adaptiven Flugzeugtriebwerke 101 wird gewährleistet, dass beim Start und Unterschallflug (z.B. Ma < 0,8) ein Fantriebwerk mit einem relativ hohen Bypassverhältnis vorliegt. Damit werden der Startlärm und der Brennstoffverbrauch reduziert. Beim Überschallflug (z.B. Ma > 1,4) wird durch geeignete Querschnittsveränderungen der Düsen 9, 13, die mit zwei Nebenstromkanälen 8, 15 zusammenwirken, sichergestellt, dass der Strömungswiderstand der Flugzeugtriebwerke 101 gering ist. Die äußere Düse 9 liegt stromabwärts des äußeren Nebenstromkanals 8, die innere Düse 13 liegt stromabwärts des inneren Nebenstromkanals 15 und stromabwärts einer Niederdruckturbine 12.

Dabei ist die Niederdruckturbine 12 so angeordnet, dass sie nicht nur den ausströmenden Gasen aus einer Brennkammer des Kerntriebwerkes 14, sondern auch der Strömung im inneren Nebenstromkanal 15 ausgesetzt ist, d.h. beide Strömungen treiben die Niederdruckturbine 12 an. Vor der Niederdruckturbine 12 ist eine Mischvorrichtung 16 - z.B. eine Mischkammer - angeordnet, in der die beiden Strömungen sich mischen können. Somit liegt eine Strömung vor, bei der die Strömung aus dem inneren Nebenstromkanal 15 und der Mitteldruckturbine 19 in der Mischvorrichtung 16 gemischt werden. Die Strömung des Kerntriebwerks 14 beaufschlagt dann die Niederdruckturbine 12.

In Fig. 2 ist ein dreiwelliges Mantelstromstrahltriebwerk 101 in einem Halbschnitt dargestellt.

Das Flugzeugtriebwerk 101 weist außen eine relativ kurze Gondel 7 (Nacelle) auf, die ein Kerntriebwerk 14 mit seiner Kerntriebwerksverkleidung 10 umgibt. Dabei zeigt Fig. 2 das adaptive Flugzeugtriebwerk 101 in einer Konfiguration, wie sie beim Start oder einem Flug mit niedriger Ma-Zahl (z.B. Ma < 0,8) vorliegt. Das Flugzeugtriebwerk 101 weist hier die beiden Nebenstromkanäle 8, 15 auf, den äußeren, zweiten Nebenstromkanal 8 - das Kerntriebwerksgehäuse 10 mindestens teilweise umgebend - und den inneren, ersten Nebenstromkanal 15 im Kerntriebwerk 14.

In der dargestellten Ausführungsform ist das Flugzeugtriebwerk 101 rotationssymmetrisch um die strichpunktierte Mittelachse ausgebildet. Bei anderen Ausführungsformen kann insbesondere die Gondel 7 von einer rotationssymmetrischen Form abweichen, wie dies z.B. von der Boeing 737 - 600 (next generation) bekannt ist.

Der Lufteinlauf des Flugzeugtriebwerks 101 vor dem Fanrotor 5 (hier mit einem Durchmesser von ca. 1,4 m) umfasst die Lufteinlauflippe 1, einen Zusatzeinlauf 2 (hier in einer geöffneten Position dargestellt), Einlaufstreben 3 und den an den Einlaufstreben 3 befestigten konischen Einlaufzentralkörper 4. Damit liegt ein an sich bekannter regelbarer Überschalleinlauf vor, bei dem durch Verschiebung der äußeren Einlauflippe 1 nach vorne eine variable Einlaufgeometrie bereitgestellt wird.

Durch die Öffnung des Zusatzeinlaufs 2 wird im Startflug und im niedrigem Unterschallbereich (z.B. Ma < 0,8) ein schwingungsfreier Fanbetrieb ermöglicht.

Hinter dem Fanrotor 5 ist ein steuer- oder regelbares (adaptives) Fannachleitrad 6 angeordnet. Der Fanrotor 5 wird über eine Niederdruckwelle 11 von einer Niederdruckturbine 12 (ein- oder zweistufig ausgeführt) am hinteren Ende des Flugzeugtriebwerks 101 angetrieben. Zur Anpassung an dem jeweiligen Lastzustand, sind für die Niederdruckturbine 12 steuer- oder regelbare (adaptive) Vorleiträder 17 (NGV) und ein steuer- oder regelbares (adaptive) Nachleitrad 18 (OGV) vorgesehen. Die Niederdruckturbine 12 wird vom Gasgemisch des Zweiwellen-Kerntriebwerks 14 angetrieben. Danach entspannt sich der Gasstrom der Niederdruckturbine 12 durch die steuer- oder regelbare (d.h. adaptive) Primärdüse 13 nach außen.

Stromab vom steuer- oder regelbaren Fannachleitrad 6, teilt sich der Gesamtdurchsatz der Luft in zwei Teile.

Der Hauptanteil der eintretenden Luft durchströmt den äußeren Nebenstromkanal 8 und entspannt sich danach durch die variable (d.h. adaptive) konvergente-divergente Düse 9. Für den Startzustand (MTO) beträgt das erste Bypassverhältnis, d.h., das Verhältnis zwischen der Strömung durch den äußeren Nebenstromkanal 8 und dem Strom durch das Kerntriebwerk 14, ungefähr 1,4, oder kleiner als 1,6.

Der kleinere Kernmassenstrom wird zum Kerntriebwerk 14 (mit steuer- oder regelbarem Vorleitrad) geführt. Das Kerntriebwerk 14 ist ein Zweikreis-Zweiwellen-Mantelstromtriebwerk mit dem inneren Nebenstromkanal 15 und mit einer Mischkammer als Mischvorrichtung 16. Es handelt sich dabei um ein an sich bekanntes Mantelstromstrahltriebwerk (mit einer Stufenkonfiguration 3+6/1+1) mit einem zweiten Bypassverhältnis (d.h. das Nebenstromverhältnis im Kerntriebwerk 14) von ungefähr 1. Das Kerntriebwerk 14 ist nachbrennerfrei, was sich insbesondere geräuschmindernd auswirkt. Auch wirkt sich dies positiv auf die Sparsamkeit und die NOX-Emissionen aus. Die Stufenkonfiguration kann variieren, so dass z.B. auch eine 2+6 / 1+1 Konfiguration möglich ist.

Das Strömungsgemisch aus der Mischvorrichtung 16, d.h. ein Gemisch einer Strömung aus der Mitteldruckturbine 19 des Kerntriebwerks 14 mit der Strömung aus dem inneren Nebenstromkanal 15, wird zur Niederdruckturbine 12 geführt und dient damit dem Antrieb des Fanrotors 5.

Die Niederdruckturbine 12 wird dabei von einem relativ großen Durchsatz angetrieben, und arbeitet dabei verhältnismäßig kalt und kann dementsprechend grundsätzlich auch einstufig ausgelegt werden. In der in Fig. 2 dargestellten Ausführungsform ist die Niederdruckturbine 12 zweistufig ausgebildet. Die Drehzahlen für einen Betrieb im Unterschallbereich können z.B. für die Niederdruckwelle 5.700 U/min, für die Mitteldruckwelle 8.200 U/min und für die Hochdruckwelle 13.500 U/min betragen.

Die Lufteinlauflippe 1 ist in Fig. 2 deutlich nach vorne geschoben und gibt damit eine Öffnung frei.

Beide Düsen 9, 13 sind in der dargestellten Betriebssituation auf den kleinsten Düsenquerschnitt eingestellt. Zur Einstellung des Düsenquerschnitts dienen jeweils Querschnitts-Verstellmechanismen (z.B. eine verstellbare Schubdüse (Irisdüse)). Die Düsen 9, 13 sind damit unabhängig voneinander regelbar konvergent-divergent ausgebildet.

Eine Triebwerksregelung hat die relevanten Triebwerkskomponenten (insbesondere den Öffnungszustand des Zusatzeinlaufs 2), entsprechend für den Startflug und den niedrigen Machflugmodus angepasst.

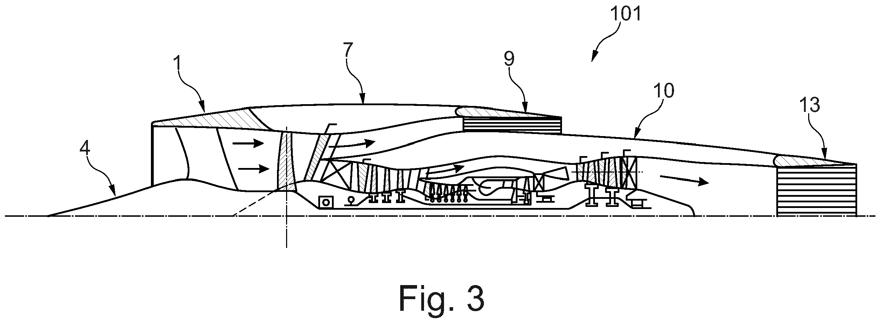

Im Folgenden wird im Zusammenhang mit Fig. 3 dargestellt, in welcher Weise eine Anpassung an andere Geschwindigkeitsbereiche erfolgen kann, wobei die Öffnung der Düsen 9, 13 in Abhängigkeit von der Mach-Zahl erfolgt.

Bei höheren Geschwindigkeiten, d.h. im hohen Unterschallflug oder bei Ma von ungefähr 1 passt sich das Flugzeugtriebwerk 101 entsprechend an. Auf die Beschreibung des Flugzeugtriebwerks 101 in der obigen Beschreibung der Fig. 2 kann Bezug genommen werden.

Im Unterschied zur Konfiguration ist der Zusatzeinlauf 2 nun geschlossen. Die Gondel 7 ist für den kleinsten induzierten Widerstand angepasst.

Der Fanrotor 5 wird durch den Einlauf mit dem benötigten Luftdurchsatz, bei minimalen Einlassverlusten versorgt. Die Düsen 9, 13 sind weiterhin auf den kleinsten Düsenquerschnitt gestellt und dabei stets bereit im Überschallflug zum Öffnen.

Ein großes erstes Bypassverhältnis (d.h. Verhältnis von Strömung durch den äußeren, ersten Nebenstromkanal 8 und der Strömung durch das Kerntriebwerk 14) ist aus zwei Gründen für Überschallflug nicht geeignet; einmal wegen des sinkendem Nettoschubs mit steigender Machzahl, und zweitens durch den großen Installationswiderstand, bedingt durch die große Stirnfläche des Flugzeugtriebwerks 101 mit großem ersten Bypassverhältnis.

Die Drehzahlen für einen Betrieb in diesem Geschwindigkeitsbereich können z.B. für die Niederdruckwelle 5.500 U/min, für die Mitteldruckwelle 8.000 U/min und für die Hochdruckwelle 13.000 U/min betragen. Auch hier gilt, dass die Werte natürlich dem Flugzeug und den Flugbedingungen angepasst werden.

Für Ma ~ 1.75 sind Mantelstromstrahltriebwerke grundsätzlich mit einem gemäßigten zweiten Bypassverhältnis (Verhältnis Strömung durch Nebenstromkanal 15 zu Strömung durch den entsprechenden Teil des Kerntriebwerks 14) ~ 1 geeignet. Es sind Mantelstromstrahltriebwerke mit verhältnismäßig groß ausgelegtem Kerntriebwerk 14. Ein solches Flugzeugtriebwerk 101 kann den für den Überschall nötigen Schub ohne Einsatz eines Nachbrenners leisten. Dadurch haben die Flugzeugtriebwerke 101 einen kleinen Verbrauch und große Reichweite, und bringen die erwünschte Umweltfreundlichkeit für eine Zulassung für kontinentale Überschallflüge.

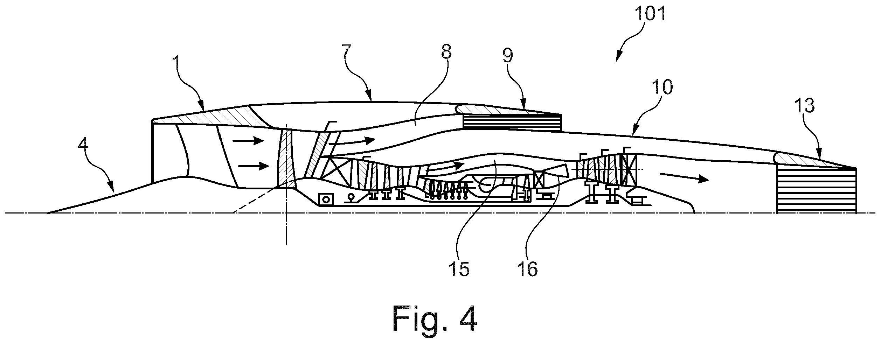

In Fig. 4 ist die Konfiguration des Flugzeugtriebwerks 101 aus den Fig. 2 und Fig. 3 für den Überschallflug dargestellt, wobei hier ein Kerntriebwerk 14 mit dem inneren, zweiten Nebenstromkanal 15 eingesetzt wird.

Dabei wird der Niederdruckkreis (Fanrotor 5 und die Niederdruckturbine 12) in einen günstigen Überschallmodus gestellt. Das Zweikreis-Zweiwellenkerntriebwerk 14 wird hingegen auf Hochleistung mit dem zweiten Bypassverhältnis von ungefähr 1 betrieben.

Der Zusatzeinlauf 2 arbeitet im Überschall geschlossen. Die konvergent-divergenten Düsen 9, 13 sind jetzt maximal geöffnet, d.h. es ist ein maximaler Querschnitt freigegeben. Durch die Niederdruckturbine 12, bei geeigneter Stellung des Vorleitrades 17, des Nachleitrades 18 und des Fanrotors 5, wird nur eine kleine Leistung geliefert, die ausreicht, um bei angepasster Drehzahl der Niederdruckwelle ein Druckverhältnis am Fanrotor 5 von ca. 1,15 bis 1.17 zu leisten. Dies reicht zur Deckung der Stoßverluste aus dem Einlauf in Überschallstellung und der Druckverluste aus dem äußeren Nebenstromkanal 8 und der äußeren Düse 9 aus. Im Ergebnis liefert somit der Fanrotor 5 einen minimalen effektiven Schub; es liegt minimaler Effektivschub im sekundären Kreis vor.

Die Strömung im Einlaufkanal nach dem Einlaufhals ist im Unterschallbereich und hat vor dem Fanrotor 5 eine radial gleichförmige Verteilung der Strömungsparameter. Diese Verteilung wird durch die geöffnete äußere Düse 9 gesichert. Auf Grund der auf maximale Querschnittsöffnung eingestellten Düse 9 strömt der größte Luftanteil aus dem Lufteinlass ungestört durch den äußeren Nebenstromkanal 8 mit einem nur etwas größeren Staudruck als der Staudruck der ungestörten Überschallströmung des Flugzeugtriebwerks 101 vor dem Einlauf.

Nach Entspannung durch die Überschalldüse 9 ergibt die Druckverteilung auf die äußere und innere Kontur der Außengondel (Lufteinlauflippe 1, äußere Gondel 7 und äußere Düse 9) einen resultierenden minimalen Effektivschub, der größer oder gleich dem Strömungswiderstand des äußeren Triebwerkskreis ist.

Im Überschallmodus setzt die hier nicht dargestellte die Triebwerksreglung den äußeren Nebenstrom 8 gezielt auf einen minimalen Schub (d.h. der Nettoschub nähert sich dem Installationswiderstand an). Dadurch, wird mit minimal zusätzlichem Kraftstoffverbrauch (für das Antreiben des Fanrotors 5 im Überschallmodus) das Flugzeugtriebwerk 101 auf ein Flugzeugtriebwerk 101 mit einem zweiten Bypassverhältnis von 1 "zusammengeschrumpft". Die äußere Gondel 7 dieses Flugzeugtriebwerks 101, d.h. die Gondel 7, die für die Installationsverluste relevant ist, wird auf die Kerntriebwerksverkleidung 10 mit einem kleineren Durchmesser reduziert.

Das so durch Steuerung oder Regelung transformierte Mantelstromstrahltriebwerk 101 ist für den leisen, sparsamen und sauberen Überschallflug besonders geeignet. Gleichzeitig setzt die Triebwerksreglung das Zweiwellen-Kerntriebwerk 14 (zweites Bypassverhältnis ca. 1) auf Überschallreiseflugleistung. Der Gesamtdurchsatz des Kerntriebwerks 14 (in weniger als 50% des Einlaufdurchsatzes, insbesondere 42% des Einlaufdurchsatzes) sichert durch Entspannung durch die entsprechend geregelte Niederdruckturbine 12 und danach durch die maximal geöffnete konvergentdivergente Düse 13 den nötigen und sauberen Schub für Überschallreiseflug.

Die Drehzahlen für einen Betrieb im Überschallbereich können z.B. für die Niederdruckwelle 4000 U/min, für die Mitteldruckwelle 8.200 U/min und für die Hochdruckwelle 13.500 U/min betragen.

Das adaptive Flugzeugtriebwerk 101 kann somit im gesamten Betriebsbereich optimal den jeweiligen Strömungsbedingungen angepasst werden. Bei vergleichsweise niedrigen Ma-Zahlen (Fig. 2, 3) liefert der Fanrotor 5 und der äußere Teil des Flugzeugtriebwerks 101 einen wichtigen Schubanteil.

Die im Strömungsquerschnitt großflächigen Anteile des Flugzeugtriebwerks 101 werden für den Überschallflug "abgeschaltet" (siehe Fig. 4). Die große, insbesondere maximale Öffnung der äußeren Düse 9 und die hier beschriebene Konfiguration des Flugzeugtriebwerks 101 bewirkt somit, dass die Teile des Flugzeugtriebwerks 101 außerhalb des Kerntriebwerkes 14 keinen nennenswerten Strömungswiderstand haben. Der Schub stammt dann im Wesentlichen nur aus dem Kerntriebwerk 14.

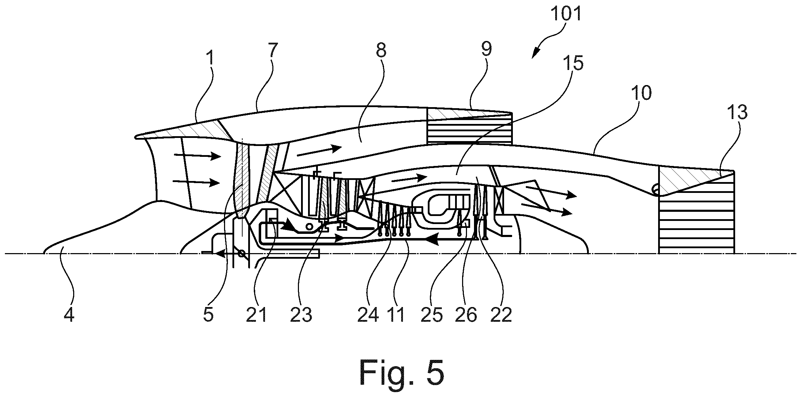

In der Fig. 5 wird eine weitere Ausführungsform dargestellt, die eine Variation der bisher dargestellten Ausführungsformen dargestellt. Grundsätzlich kann somit auf die obigen Beschreibungen Bezug genommen werden, wobei bei dem Flugzeugtriebwerk 101 hierein Hochleistungsgetriebe 21 - als Planetenradgetriebe ausgebildet - vorgesehen ist, das zwischen Fanrotor 5 und der Niederdruckwelle 11 angeordnet ist. Das Hochleistungsgetriebe 21 ist ein differentielles Getriebe (*Differential Powergearbox* (DPGB)).

Wie bei den an sich bekannten Turbofan-Triebwerken kann der Fanrotor 5 auf Grund des zwischengeschalteten Hochleistungsgetriebes 21 mit einer geringeren Drehzahl betrieben werden, als die Niederdruckturbine 22. Der Fanrotor 5 weist verstellbare Schaufeln auf.

Bei dieser Ausführungsform kann z.B. der Außendurchmesser der äußeren Gondel 7 an der Lufteinlauflippe 7 zwischen 100 cm und 170 cm liegen. Der äußere Durchmesser an der primären Düse 13 kann zwischen 80 cm und 120 cm liegen.

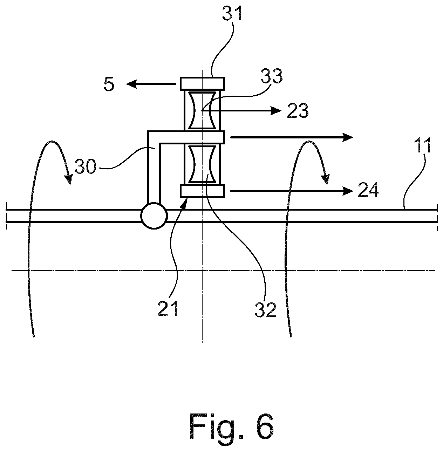

Des Weiteren verfügt das Flugzeugtriebwerk 101 über einen Mitteldruckverdichter 23, einen Hochdruckverdichter 24, eine Hochdruckturbine 25 und die Niederdruckturbine 22. Der Leistungseintrag in das Hochleistungsgetriebe 21 erfolgt über die Niederdruckwelle 11 (siehe auch Fig. 6). Die Planeten 33 des Hochleistungsgetriebes 21 treiben den Mitteldruckverdichter 23 an. Der äußere Ring 31 des Planetengetriebes 21 treibt den Fanrotor 5 an. Ein Teil des Leistungsbedarfs des Hochdruckverdichters 24 wird über das Sonnenrad 32 des Planetengetriebes 21 zugeführt. Die Leistungsaufnahme des Hochdruckverdichters 24 erfolgt somit über die Hochdruckturbine 25 ($P_{HDT}$) und das Hochleistungsgetriebe 21 ($P_{ad}$).

Damit stehen als Stellgrößen (oder Designgrößen) für die Regelung des Flugzeugtriebwerks das Drehzahlverhältnis des Hochleistungsgetriebes 21, der Neigungswinkel der Rotorschaufeln des Fanrotors 5 und die Querschnittsgeometrien der primären Düse 13 und der sekundären Düse 9 zur Verfügung.

Im Folgenden wird ein vereinfachtes Modell mit folgenden Beziehungen angegeben:

$$P_{NDT} = P_{DPGB} + P_{MDV}$$

$$\eta\, P_{DPGB} = P_{Fan} + P_{ad}$$

$$P_{ad} + P_{HDT} = P_{HDV}$$

$$(N_{HDT} - N_{NDT}) / (N_{NDT} - N_{Fan}) = i = const$$

$$P_{Fan} / P_{ad} = i\, (N_{Fan} / N_{HDT})$$

$$P_{Fan} = f_1(beta,\, N_{Fan},\, \text{sekundäre Düsengeometrie})$$

$$P_{HDT} = f_2(W_f,\, \text{primäre Düsengeometrie})$$

$$P_{NDT} = f_3(W_f,\, \text{primäre und sekundäre Düsengeometrie})$$

Austrittsbedingungen für die primäre und sekundäre Düsen

Dabei bedeuten:

| | |
|---|---|
| $P_{NDT}$ | Leistung Niederdruckturbine |
| $P_{DPGB}$ | Leistung Hochleistungsgetriebe |
| $P_{MDV}$ | Leistung Mitteldruckverdichter |
| $P_{Fan}$ | Leistung Fan |
| $P_{ad}$ | Zusatzleistung für Hochdruckverdichter |
| $P_{HDT}$ | Leistung Hochdruckturbine |
| $P_{HDV}$ | Leistung Hochdruckverdichter |
| $N_{HDT}$ | Drehzahl Hochdruckturbine |
| $N_{NDT}$ | Drehzahl Niederdruckturbine |
| $N_{Fan}$ | Drehzahl Fanrotor |
| $W_f$ | Brennstoffdurchsatz |
| $f_1, f_2, f_3$ | Funktionale Zusammenhänge |
| beta | Fan-Einstellparameter |
| $\eta$ | Wirkungsgrad des Hochleistungsgetriebes |

Aus dem Modell kann man ersehen, dass die Niederdruckturbine 22 sowohl das Hochleistungsgetriebe 21, den Fanrotor 5 als auch den Mitteldruckverdichter 23 antreibt.

Die Zusatzleistung $P_{ad}$ entspricht der Differenz zwischen der Leistungsaufnahme des Hochdruckverdichters 24 und der Leistungsabgabe der Hochdruckturbine 25.

In einer Ausführungsform kann das Verhältnis des Ringdurchmessers des Hochleistungsgetriebes 21 zu den Planetendurchmessern $i \approx 2.12$ betragen. Das Hochleistungsgetriebe 21 wiegt ca. 300 kg.

In der Fig. 6 ist in schematischer Weise die Kopplung der Wellen, Verdichter und Turbinen der Ausführungsform gemäß Fig. 5 dargestellt.

Die Niederdruckwelle 11 dreht in der angegebenen Richtung. Vor, d.h. in Fig. 6 links vom Hochleistungsgetriebe 21 (als Planetenradgetriebe ausgeführt) ist die Niederdruckwelle 11 mit dem Carrier 30 des Planetenradgetriebes 21 verbunden. Die Welle des Mitteldruckverdichters 23 wird über den Carrier 30 angetrieben (in Fig. 6 durch Pfeil dargestellt).

Über den äußeren Ring 31 des Planetenradgetriebes 21 wird der Fanrotor 5 angetrieben (in Fig. 5 durch Pfeil dargestellt).

Über das Sonnenrad 32 des Planetenradgetriebes 21 wird Leistung an den Hochdruckverdichter 24 übertragen.

**Bezugszeichenliste**

| | |
|---|---|
| 1 | Lufteinlauflippe |
| 2 | Zusatzeinlauf |
| 3 | Einlaufstreben |
| 4 | Einlaufzentralkörper (Konus) |
| 5 | Fanrotor |
| 6 | steuer- oder regelbares Fannachleitrad |
| 7 | äußere Gondel |
| 8 | äußerer Nebenstromkanal |
| 9 | sekundäre, äußere Düse |
| 10 | Kerntriebwerksverkleidung |
| 11 | Niederdruckwelle |
| 12 | Niederdruckturbine mit variablem Vorleitrad |
| 13 | primäre, innere Düse |
| 14 | Kerntriebwerk (Zweikreis-Zweiwellentriebwerk) |
| 15 | innerer Nebenstromkanal |
| 16 | Mischvorrichtung und Mischer des Kerntriebwerks |
| 17 | steuer- oder regelbares Vorleitrad |
| 18 | steuer- oder regelbares Nachleitrad |
| 19 | Mitteldruckturbine |
| 22 | Niederdruckturbine |
| 21 | Hochleistungsgetriebe |
| 23 | Mitteldruckverdichter |
| 24 | Hochdruckverdichter |
| 25 | Hochdruckturbine |
| | |
| 30 | Carrier Hochleistungsgetriebe |
| 31 | äußeres Rad des Planetenradgetriebes |
| 32 | Sonnenrad |
| 33 | Planetenrad |
| | |
| 100 | Flugzeug |
| 101 | Flugzeugtriebwerk |
| 102 | Tragfläche |

**Patentansprüche**

**1.** Adaptives Flugzeugtriebwerk für den Unter- und Überschallbetrieb eines Flugzeuges aufweisend ein Zweistrom, Drei-Wellentriebwerk mit zwei Nebenstromkanälen (8, 15),

mit einem ersten, inneren Nebenstromkanal (15) in einem Kerntriebwerk (14) des Flugzeugtriebwerks (101) und einem zweiten, äußeren Nebenstromkanal (8), der den ersten Nebenstromkanal (15) wenigstens teilweise umgibt, und

mit Adaptionsmitteln, insbesondere verstellbaren Düsen (13, 9) für die Änderung eines durchströmten Querschnitts des Kerntriebwerks (14) mit dem ersten Nebenstromkanal (15) und für die Änderung des durchströmten Querschnittes des zweiten Nebenstromkanals (8) in Abhängigkeit von der Fluggeschwindigkeit,

**gekennzeichnet durch**

eine Mischvorrichtung (16) für eine Strömung aus der Brennkammer und einer Strömung aus dem inneren Nebenstromkanal (15), wobei die Mischvorrichtung (16) in Strömungsrichtung vor einer Niederdruckturbine (12) angeordnet ist.

2. Adaptives Flugzeugtriebwerk, nach Anspruch 1, **gekennzeichnet durch** eine innere, primäre Düse (13) zur Änderung des Querschnitts des Kerntriebwerks (14) mit dem ersten Nebenstromkanal (15) und eine zweite, sekundäre Düse (9) zur Änderung des durchströmten Querschnitts des zweiten Nebenstromkanals (8), die derart eingerichtet und ausgebildet sind, dass für den Nettoschub des gesamten Flugzeugtriebwerks

$$F_{netto} = F_{primär,\ netto} + F_{sekundär,\ netto},$$

und für den effektiven Schub des gesamten Flugzeugtriebwerks

$$F_{effektiv} = F_{netto} - \text{Widerstandskraft des installierten Flugzeugtriebwerkes}$$

gilt, und der Anteil des Nettoschubs $F_{primär,\ netto}$ der primären Düse (13) und / oder der Anteil des Nettoschubs $F_{sekundär,netto}$ in Abhängigkeit von der Fluggeschwindigkeit einstellbar ist, insbesondere auf Werte für $F_{primär,\ netto}$ von 50% des Nettoschubs ($F_{netto}$) im Fall des Starts bis zu 91% des Nettoschubs ($F_{netto}$) im Fall der Reisefluggeschwindigkeit und Wert für $F_{sekundär,\ netto}$ von 50% des Nettoschubs ($F_{netto}$) im Fall des Stars bis zu 9% des Nettoschubs ($F_{netto}$) für den Fall der Reisefluggeschwindigkeit.

3. Adaptives Flugzeugtriebwerk nach Anspruchs 1 oder 2, **dadurch gekennzeichnet, dass** die äußere, sekundäre Düse (9) derart eingerichtet und ausgebildet ist, dass mindestens ein durchströmter Querschnitt des zweiten Nebenstromkanals (8) bei Überschallströmung, insbesondere bei Ma > 1,4, vergrößerbar, insbesondere maximierbar ist.

4. Adaptives Flugzeugtriebwerk nach mindestens einem der vorhergehenden Ansprüche, **dadurch gekennzeichnet, dass** die äußere, sekundäre Düse (9) derart eingerichtet und ausgebildet ist, dass mindestens ein durchströmter Querschnitt des zweiten Nebenstromkanals (8) bei Unterschallströmung, insbesondere bei Ma < 0,8 verkleinerbar ist, insbesondere minimierbar ist.

5. Adaptives Flugzeugtriebwerk nach mindestens einem der vorhergehenden Ansprüche, **dadurch gekennzeichnet, dass** die äußere, sekundäre Düse (9) derart eingerichtet und ausgebildet ist, dass der durchströmte Querschnitt des zweiten Nebenstromkanals (8) so vergrößerbar ist, dass bei Überschallströmung die Differenz zwischen dem Nettoschub der sekundären Düse ($F_{sekundär,\ effektiv'}$) und dem Installationswiderstand des sekundären Kreises ($ID_{sekundär}$), d.h. der effektive Schub (F-sekundär, effektiv) der sekundären Düse (9) klein wird.

6. Adaptives Flugzeugtriebwerk nach mindestens einem der vorhergehenden Ansprüche, **dadurch gekennzeichnet, dass** im Einlaufbereich des Flugzeugtriebwerks (101) ein Zusatzeinlauf (2) vorgesehen ist, der bei Unterschallbedingungen öffenbar ist und bei Überschallbedingungen schließbar ist.

7. Adaptives Flugzeugtriebwerk nach mindestens einem der vorhergehenden Ansprüche, **gekennzeichnet durch** einen Fanrotor (5), mindestens ein steuer- oder regelbares Fannachleitrad (6), mindestens ein steuer- oder regelbares Vorleitrad (17) der Niederdruckturbine (12) und / oder mindestens ein steuer- oder regelbares Nachleitrad (18) der Niederdruckturbine (12).

8. Adaptives Flugzeugtriebwerk nach mindestens einem der vorhergehenden Ansprüche, **gekennzeichnet durch** einen Fanrotor (5), der mit einem Hochleistungsgetriebe (21) gekoppelt ist und über eine Turbinenstufe (22) antreibbar ist, insbesondere mit einem Fanrotor (5) mit verstellbaren Schaufeln, wobei insbesondere ein Leistungseintrag in das Hochleistungsgetriebe (21) über die Niederdruckwelle (11) erfolgt, der Mitteldruckverdichter (23) über Planeten des Hochleistungsgetriebes (21) antreibbar sind, der Fanrotor (5) über den Ring des Planetengetriebes (21) antreibbar ist und ein Teil des Leistungsbedarfs des Hochdruckverdichters (24) über das Sonnenrad des Planetengetriebes (21) zuführbar ist.

9.  Adaptives Flugzeugtriebwerk nach mindestens einem der vorhergehenden Ansprüche, **dadurch gekennzeichnet, dass** es nachbrennerfrei ist.

10. Adaptives Flugzeugtriebwerk nach mindestens einem der vorhergehenden Ansprüche, **dadurch gekennzeichnet, dass** es derart eingerichtet und ausgebildet ist, dass im Unterschallbereich ein Bypassverhältnis

$$\frac{\text{Durchfluss durch ersten und zweiten Nebenstromkanal}}{\text{Durchfluss durch Durchströmung Fanrotor} - (\text{Durchfluss durch ersten und zweiten Nebenstromkanal})}$$

von kleiner 4, insbesondere 3,8 einstellbar ist.

11. Adaptives Flugzeugtriebwerk nach mindestens einem der vorhergehenden Ansprüche, **dadurch gekennzeichnet, dass** es derart eingerichtet und ausgebildet ist, dass für den inneren Nebenstromkanal (15) im Über- und Unterschallbereich ein Bypassverhältnis zwischen 1,2 und 0,8, insbesondere 1 einstellbar ist.

12. Adaptives Flugzeugtriebwerk nach mindestens einem der vorhergehenden Ansprüche, **gekennzeichnet durch** eine Regelungs- oder Steuerungsvorrichtung für die Einstellung der Adaptionsmittel, insbesondere der primären und / oder sekundären Düsen (13, 8), des mindestens einen Fannachleitrades (6), des mindestens einen Vorleitrades (17) der Niederdruckturbine (12) und / oder des mindestens einen Nachleitrades (18) der Niederdruckturbine (12) in Abhängigkeit von der Geschwindigkeit, bei der das Flugzeugtriebwerk (101) betrieben wird.

13. Adaptives Flugzeugtriebwerk nach mindestens einem der vorhergehenden Ansprüche, **dadurch gekennzeichnet, dass** die Niederdruckturbine (12, 22) mindestens teilweise von einer Strömung aus einer Brennkammer und einer Strömung aus dem inneren Nebenstromkanal (15) antreibbar ist.

14. Adaptives Flugzeugtriebwerk nach mindestens einem der vorhergehenden Ansprüche, **dadurch gekennzeichnet, dass** eine äußere Gondel (7) und / oder das Kerntriebwerk (14) achsensymmetrisch ausgebildet sind.

15. Flugzeug mit mindestens einem adaptiven Flugzeugtriebwerk (101) nach einem der Ansprüche 1 bis 14, insbesondere mit mindestens einem Flugzeugtriebwerk (101) am Heck, insbesondere oberhalb einer Tragfläche (102) Flugzeugs (100).

**Claims**

1.  Adaptive aircraft engine for the subsonic and supersonic operation of an aircraft,
    having a turbofan three-shaft engine having two bypass ducts (8, 15), having a first inner bypass duct (15) in a core engine (14) of the aircraft engine (101), and a second outer bypass duct (8) which at least in part surrounds the first bypass duct (15); and
    having adapting means, in particular adjustable nozzles (13, 9), for varying a cross section of the core engine (14) that is passed through by a flow and has the first bypass duct (15), and for varying the cross section of the second bypass duct (8) that is passed through by a flow, as a function of the flight speed,
    **characterized by**
    a mixing device (16) for a flow from the combustion chamber and a flow from the inner bypass duct (15), wherein the mixing device (16) in the flow direction is disposed ahead of a low-pressure turbine (12).

2.  Adaptive aircraft engine according to Claim 1, **characterized by** an inner primary nozzle (13) for varying the cross section of the core engine (14) that has the first bypass duct (15), and a second secondary nozzle (9) for varying the cross section of the second bypass duct (8) that is passed through by a flow, said nozzles (13, 9) being specified and configured that

$$F_{net} = F_{primary,net} + F_{secondary,net}$$

applies to the net thrust of the entire aircraft engine, and

$$F_{effective} = F_{net} - \text{Resistance force of the installed aircraft engine}$$

applies to the effective thrust of the entire aircraft engine, and the proportion of the net thrust $F_{primary, net}$ of the primary nozzle (13) and/or the proportion of the net thrust $F_{secondary, net}$ is adjustable as a function of the flight speed, in particular to values for $F_{primary,net}$ of 50% of the net thrust ($F_{net}$) in the case of take-off, up to 91% of the net thrust ($F_{net}$) in the case of cruising speed, and to a value for $F_{secondary, net}$ of 50% of the net thrust ($F_{net}$) in the case of take-off, up to 9% of the net thrust ($F_{net}$) in the case of cruising speed.

3. Adaptive aircraft engine according to Claim 1 or 2, **characterized in that** the outer secondary nozzle (9) is specified and configured in such a manner that at least one cross section of the second bypass duct (8) that is passed through by a flow is capable of being enlarged, in particular of being maximized, at a supersonic flow, in particular at Ma > 1.4.

4. Adaptive aircraft engine according to at least one of the preceding claims, **characterized in that** the outer secondary nozzle (9) is specified and configured in such a manner that at least one cross section of the second bypass duct (8) that is passed through by a flow is capable of being decreased, in particular minimized, at a subsonic flow, in particular at Ma < 0.8.

5. Adaptive aircraft engine according to at least one of the preceding claims, **characterized in that** the outer secondary nozzle (9) is specified and configured in such a manner that the cross section of the second bypass duct (8) that is passed through by a flow is capable of being enlarged such that the difference between the net thrust of the secondary nozzle ($F_{secondary,effective}$) and the installation resistance of the second circuit ($ID_{geconaary}$), that is to say the effective thrust ($F_{secondary,effective}$) of the secondary nozzle (9) is rendered so as to be small at a supersonic flow.

6. Adaptive aircraft engine according to at least one of the preceding claims, **characterized in that** an additional inlet (2) is provided in the inlet region of the aircraft engine (101), said additional inlet (2) being capable of being opened at subsonic conditions and capable of being closed at supersonic conditions.

7. Adaptive aircraft engine according to at least one of the preceding claims, **characterized by** a fan rotor (5), at least one fan outlet guide wheel (6) that is controllable in an open-loop or closed-loop manner, at least one inlet guide wheel (17) of the low-pressure turbine (12) that is controllable in an open-loop or closed-loop manner, and/or at least one outlet guide wheel (18) of the low-pressure turbine (12) that is controllable in an open-loop or closed-loop manner.

8. Adaptive aircraft engine according to at least one of the preceding claims, **characterized by** a fan rotor (5) which is coupled to a high-performance gearbox (21) and is capable of being driven by way of a turbine stage (22), in particular having a fan rotor (5) with adjustable blades, wherein in particular a power input into the high-performance gearbox (21) takes place by way of the low-pressure shaft (11), the medium-pressure compressor (23) is capable of being driven by planets of the high-performance gearbox (21), the fan rotor (5) is capable of being driven by way of the ring of the planetary gearbox (21), and part of the power requirement of the high-pressure compressor (24) is capable of being supplied by way of the sun gear of the planetary gearbox (21).

9. Adaptive aircraft engine according to at least one of the preceding claims, **characterized in that** said adaptive aircraft engine is without an afterburner.

10. Adaptive aircraft engine according to at least one of the preceding claims, **characterized in that** said adaptive aircraft engine is specified and configured in such a manner that a bypass ratio

```
throughput through the first and second bypass duct
throughput by way of flow through the fan rotor −
(throughput through the first and second bypass duct)
```

of less than 4, in particular of 3.8, is capable of being set in the subsonic range.

11. Adaptive aircraft engine according to at least one of the preceding claims, **characterized in that** said adaptive aircraft engine is specified and configured in such a manner that a bypass ratio between 1.2 and 0.8, in particular of 1, is capable of being set for the inner bypass duct (15) in the supersonic and subsonic range.

12. Adaptive aircraft engine according to at least one of the preceding claims, **characterized by** a closed-loop or open-loop control device for setting the adapting means, in particular the primary and/or secondary nozzles (13, 8) of the at least one fan outlet guide wheel (6), of the at least one inlet guide wheel (17) of the low-pressure turbine (12), and/or of the at least one outlet guide wheel (18) of the low-pressure turbine (12) as a function of the speed at which the aircraft engine (101) is operated.

13. Adaptive aircraft engine according to at least one of the preceding claims, **characterized in that** the low-pressure turbine (12, 22) is capable of being at least partially driven by a flow from a combustion chamber and a flow from the inner bypass duct (15).

14. Adaptive aircraft engine according to at least one of the preceding claims, **characterized in that** an outer nacelle (7) and/or the core engine (14) are/is configured so as to be axially symmetrical.

15. Aircraft having at least one adaptive aircraft engine (101) according to one of Claims 1 to 14, in particular having at least one aircraft engine (101) at the rear, in particular above an airfoil (102) of an aircraft (100).

**Revendications**

1. Moteur d'aéronef adaptatif pour l'opération subsonique et supersonique d'un aéronef, comprenant un moteur à double flux et à trois arbres muni de deux canaux de deuxième flux (8, 15),
comprenant un premier canal de deuxième flux (15) interne dans un moteur central (14) du moteur d'aéronef (101) et un deuxième canal de deuxième flux (8) externe qui entoure au moins partiellement le premier canal de deuxième flux (15), et
comprenant des moyens d'adaptation, notamment des tuyères réglables (13, 9), pour la modification d'une section transversale, traversée par un courant, du moteur central (14) avec le premier canal de deuxième flux (15) et pour la modification de la section transversale traversée par un courant du deuxième canal de deuxième flux (8) en fonction de la vitesse de vol,
**caractérisé par**
un arrangement de mélange (16) pour un écoulement hors de la chambre de combustion et un écoulement hors du premier canal de deuxième flux (15) interne, l'arrangement de mélange (16) étant disposé avant une turbine basse pression (12) dans le sens de l'écoulement.

2. Moteur d'aéronef adaptatif selon la revendication 1, **caractérisé par** une tuyère primaire (13) interne destinée à modifier la section transversale du moteur central (14) avec le premier canal de deuxième flux (15) et une deuxième tuyère secondaire (9) destinée à modifier la section transversale traversée par un courant du deuxième canal de deuxième flux (8), lesquelles sont conçues et configurées de telle sorte que la règle suivante s'applique à la poussée nette du moteur d'aéronef dans son ensemble

$$F_{nette} = F_{primaire, nette} + F_{secondaire, nette}$$

et la règle suivante pour la poussée effective du moteur d'aéronef dans son ensemble

$$F_{effective} = F_{nette} - \text{force de traînée du moteur d'aéronef installé}$$

et la part de la poussée nette $F_{primaire, nette}$ de la tuyère primaire (13) et/ou la part de la poussée nette $F_{secondaire, nette}$ est réglable en fonction de la vitesse de vol, notamment à des valeurs pour une $F_{primaire, nette}$ de 50 % de la poussée nette ($F_{nette}$) dans le cas du démarrage jusqu'à 91 % de la poussée nette ($F_{nette}$) dans le cas de la vitesse de vol de croisière et une valeur pour $F_{secondaire, nette}$ de 50 % de la poussée nette ($F_{nette}$) dans le cas du démarrage jusqu'à 9 % de la poussée nette ($F_{nette}$) dans le cas de la vitesse de vol de croisière.

3. Moteur d'aéronef adaptatif selon la revendication 1 ou 2, **caractérisé en ce que** la tuyère secondaire (9) externe est conçue et configurée de telle sorte qu'au moins une section transversale traversée par un courant du deuxième canal de deuxième flux (8) peut être agrandie, notamment rendue maximale, dans le cas d'un écoulement supersonique, notamment avec Ma > 1,4.

4. Moteur d'aéronef adaptatif selon au moins l'une des revendications précédentes, **caractérisé en ce que** la tuyère secondaire (9) externe est conçue et configurée de telle sorte qu'au moins une section transversale traversée par un courant du deuxième canal de deuxième flux (8) peut être réduite, notamment rendue minimale, dans le cas d'un écoulement subsonique, notamment avec Ma < 0,8.

5. Moteur d'aéronef adaptatif selon au moins l'une des revendications précédentes, **caractérisé en ce que** la tuyère secondaire (9) externe est conçue et configurée de telle sorte que la section transversale, traversée par un courant, du deuxième canal de deuxième flux (8) peut être agrandie de telle sorte que dans le cas d'un écoulement supersonique, la différence entre la poussée nette de la tuyère secondaire ($F_{secondaire, effective}$) et la résistance d'installation du circuit secondaire ($ID_{secondaire}$) , c'est-à-dire la poussée effective ($F_{secondaire, effective}$) de la tuyère secondaire (9) devient petite.

6. Moteur d'aéronef adaptatif selon au moins l'une des revendications précédentes, **caractérisé en ce qu'**une entrée supplémentaire (2) se trouve dans la zone d'entrée du moteur d'aéronef (101), laquelle peut être ouverte lors des conditions subsoniques et peut être fermée lors des conditions supersoniques.

7. Moteur d'aéronef adaptatif selon au moins l'une des revendications précédentes, **caractérisé par** un rotor de ventilateur (5), au moins une aube directrice arrière de ventilateur (6) commandable ou régulable, au moins une aube directrice avant (17) commandable ou régulable de la turbine basse pression (12) et/ou au moins une aube directrice arrière (18) commandable ou régulable de la turbine basse pression (12).

8. Moteur d'aéronef adaptatif selon au moins l'une des revendications précédentes, **caractérisé par** un rotor de ventilateur (5) qui est couplé à un engrenage de forte puissance (21) et peut être entraîné par le biais d'un étage de turbine (22), notamment avec un rotor de ventilateur (5) à pales positionnables, un apport de puissance dans l'engrenage de forte puissance (21) s'effectuant notamment par le biais de l'arbre à basse pression (11), le compresseur à moyenne pression (23) pouvant être entraînés par le biais de pignons planétaires de l'engrenage de forte puissance (21), le rotor de ventilateur (5) pouvant être entraîné par la couronne de l'engrenage planétaire (21) et une partie du besoin en puissance du compresseur à haute pression (24) pouvant être acheminée par le biais de la roue solaire de l'engrenage planétaire (21).

9. Moteur d'aéronef adaptatif selon au moins l'une des revendications précédentes, **caractérisé en ce qu'**il est exempt de post-combustion.

10. Moteur d'aéronef adaptatif selon au moins l'une des revendications précédentes, **caractérisé en ce qu'**il est conçu et configuré de telle sorte qu'en régime subsonique, un rapport de dérivation

débit à travers le premier et le deuxième canal de deuxième flux / débit par l'écoulement de traversée du rotor de ventilateur − (débit à travers le premier et le deuxième canal de deuxième flux)

inférieur à 4, notamment de 3,8 peut être réglé.

11. Moteur d'aéronef adaptatif selon au moins l'une des revendications précédentes, **caractérisé en ce qu'**il est conçu et configuré de telle sorte qu'un rapport de dérivation compris entre 1,2 et 0,8, notamment égal à 1, peut être réglé pour le canal de deuxième flux (15) interne dans la plage supersonique et subsonique.

12. Moteur d'aéronef adaptatif selon au moins l'une des revendications précédentes, **caractérisé par** un arrangement de régulation ou de commande pour le réglage des moyens d'adaptation, notamment des tuyères primaire et/ou secondaire (13, 8), de l'au moins une aube directrice arrière de ventilateur (6), de l'au moins une aube directrice avant (17) de la turbine basse pression (12) et/ou de l'au moins une aube directrice arrière (18) de la turbine basse pression (12) en fonction de la vitesse à laquelle fonctionne le moteur d'aéronef (101).

13. Moteur d'aéronef adaptatif selon au moins l'une des revendications précédentes, **caractérisé en ce que** la turbine basse pression (12, 22) peut au moins partiellement être entraînée par un écoulement provenant de la chambre de combustion et un écoulement provenant du canal de deuxième flux (15) interne.

14. Moteur d'aéronef adaptatif selon au moins l'une des revendications précédentes, **caractérisé en ce qu'**une nacelle (7) extérieure et/ou le moteur central (14) sont configurés en symétrie des axes.

15. Aéronef comprenant au moins un moteur d'aéronef (101) adaptatif selon l'une des revendications 1 à 14, notamment comprenant un moteur d'aéronef (101) à l'arrière, notamment au-dessus d'une voilure (102) d'un aéronef (100).

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- US 2007000232 A1
- US 5404713 A
- US 2006236675 A1
- US 4085583 A
- DE 2624164 A1

**In der Beschreibung aufgeführte Nicht-Patentliteratur**

- **MÜLLER.** *Luftstrahltriebwerke,* 1997, 312-313